# FASCICULE DE BREVET EUROPEEN

(11) **EP 2 038 978 B1**
(45) Date de publication et mention de la délivrance du brevet: **19.08.2009**
(21) Numéro de dépôt: 07803957.5
(22) Date de dépôt: 28.06.2007
(51) Int. Cl.: H02G 15/34

(54) **STRUCTURE DE TRAVERSEE ELECTRIQUE POUR ELEMENT SUPRACONDUCTEUR**
ELEKTRISCHE DURCHFÜHRUNGSSTRUKTUR FÜR EIN SUPRALEITENDES ELEMENT
ELECTRIC FEEDTHROUGH STRUCTURE FOR SUPERCONDUCTOR ELEMENT

(30) Priorité: 29.06.2006 FR 0652704
(43) Date de publication de la demande: 25.03.2009
(73) Titulaire: Nexans, 75008 Paris (FR)
(72) Inventeur: LALLOUET, Nicolas, F-62132 Fiennes (FR); DELPLACE, Sébastien, F-62610 Ardres (FR); MIREBEAU, Pierre, F-91140 Villebon S/Yvette (FR)
(74) Mandataire: Lenne, Laurence
(86) Numéro de dépôt international: PCT/FR2007/051547
(87) Numéro de publication internationale: WO 2008/001014

(56) Documents cités:
- EP-A- 1 283 576
- EP-A1- 0 629 811

## Description

La présente invention concerne une structure de traversée électrique pour élément supraconducteur, tel qu'un câble transportant du courant électrique sous moyenne ou haute tension. Cette structure permet de relier l'extrémité de l'élément supraconducteur à température cryogénique à un objet, par exemple à un câble non supraconducteur ou à un équipement, à température ambiante, habituellement à l'air libre.

Du fait de la différence importante de température entre l'élément supraconducteur et l'objet à relier à cet élément, d'une part température cryogénique qui peut être de l'ordre de -200°C et d'autre part température ambiante, il est nécessaire d'intercaler une structure de connexion entre l'élément supraconducteur et l'objet afin d'effectuer la transition de température en limitant au maximum les pertes thermiques, tout en respectant les contraintes électriques dues par exemple à la haute tension dans le cas d'un câble. Cette structure comporte une traversée électrique composée principalement d'un conducteur central entouré d'une gaine isolante, pour transporter le courant électrique du câble supraconducteur jusqu'à une connexion de sortie à température ambiante. Cette structure doit, sur une longueur raisonnable, effectuer la transition de température tout en s'assurant que les pertes par conduction thermique le long de la traversée électrique sont faibles, de façon à éviter l'ébullition du liquide cryogénique qui refroidit le câble.

Un autre problème technique à résoudre est de maîtriser la répartition du champ électrique créé par la moyenne ou haute tension du conducteur central de la traversée électrique de façon à éviter des arcs électriques ou « claquages ».

Le conducteur central de la traversée est constitué d'un conducteur métallique cylindrique de diamètre suffisamment grand pour permettre le transport de courants électriques d'intensité importante. Par exemple, pour des courants de l'ordre de plusieurs milliers d'ampères, le diamètre du conducteur central peut être de l'ordre de 50 à 70 mm. La tension électrique étant elle aussi habituellement élevée, par exemple 100.000 Volts, la gaine entourant le conducteur central doit être parfaitement isolante afin d'éviter la formation de claquages et ceci sur toute la longueur de la structure de traversée qui peut atteindre plusieurs mètres de longueur.

Les différences de température tout au long de la traversée posent un problème de conservation de la bonne isolation électrique de la gaine entourant le conducteur central. En effet, les matériaux constituant le conducteur (par exemple de l'aluminium ou du cuivre) et la gaine (par exemple de l'époxy) ont des conductivités thermiques différentes ce qui peut engendrer des contraintes à l'interface entre le conducteur et la gaine. Ainsi, un flux thermique important se propageant dans la traversée peut conduire localement à un gradient de température élevé entre la gaine et le conducteur, ce qui peut fissurer la gaine et détruire en grande partie son pouvoir d'isolation. De plus, la différence de coefficient de dilatation thermique des matériaux constituant le conducteur et la gaine peut être la cause de contraintes mécaniques entre la gaine et le conducteur, et donc la cause de fissures dans la gaine.

Afin d'éviter la formation de ces fissures, une solution connue consiste à choisir les matériaux constituant la gaine et le conducteur central de telle sorte que leurs coefficients de dilation thermique soient sensiblement identiques. Par exemple, certaines compositions spécifiques d'alliages d'aluminium et de résines époxy ont des coefficients de dilatation thermique très proches, dont la différence peut être de l'ordre de 5.10⁻⁶ par degré Kelvin. Cette solution permet de limiter le risque de formation de fissures, mais ne l'élimine pas complètement car il est très difficile, voir même pratiquement impossible, de trouver un matériau bon conducteur de l'électricité, d'une part, et un matériau isolant, d'autre part, ayant le même comportement thermique, notamment le même coefficient de dilatation thermique et la même conductivité thermique. De plus, les deux matériaux doivent pouvoir supporter sans se détériorer des variations de température de l'ordre de -200°C jusqu'aux températures ambiantes.

La demande de brevet EP 1 283 576 A1 décrit le préambule de la revendication 1 selon une structure de traversée électrique du type comprenant :
- un conducteur central dont l'une des deux extrémités est destinée à être connectée à un élément supraconducteur situé dans une enceinte à température cryogénique et l'autre extrémité à un objet à température ambiante,
- une gaine électriquement isolante entourant le conducteur sur sensiblement toute la longueur du conducteur, et
- un tube métallique entourant le conducteur sur sensiblement toute sa longueur et interposé entre la gaine isolante et le conducteur, le tube étant fixé mécaniquement au conducteur à proximité de l'extrémité du conducteur connectée à l'élément supraconducteur et n'étant pas fixé mécaniquement au conducteur à proximité de l'extrémité du conducteur connecté audit objet à température ambiante.

Toutefois, le tube est en acier inoxydable qui est un mauvais conducteur et n'a pas de fonction électrique puisqu'il n'est pas relié à l'une des extrémités. La totalité du courant transporté de l'élément supraconducteur à l'objet à température ambiante est transmis par le conducteur.

Il en résulte une perte de section efficace pour le transport de courant le long de la traversée et un risque important d'échauffement et de pertes au niveau de cette traversée.

L'invention résout ce problème et propose une structure de traversée électrique du type comprenant :
- un conducteur central dont l'une des deux extrémités est destinée à être connectée à un élément supraconducteur situé dans une enceinte à température cryogénique et l'autre extrémité à un objet à température ambiante, et
- une gaine électriquement isolante entourant le conducteur sur sensiblement toute la longueur du conducteur,
- un tube métallique entourant le conducteur sur sensiblement toute sa longueur et interposé entre la gaine isolante et le conducteur, le tube étant fixé mécaniquement au conducteur à proximité de l'une des extrémités du conducteur, dite première extrémité, et n'étant pas fixé mécaniquement au conducteur à proximité de l'autre des extrémités du conducteur, dite seconde extrémité,
- un espace entre ledit conducteur et ledit tube contenant un gaz, structure **caractérisée en ce que** le tube est en contact électrique avec ladite seconde extrémité du conducteur.

La présente invention propose ainsi une structure améliorée de la traversée électrique qui en même temps résout les problèmes liés aux différences de coefficients de dilatation et de conductibilité thermiques entre les matériaux constituant la gaine et le conducteur central et améliore la capacité de transport de courant de la traversée et limite les problèmes d'étanchéité de l'espace entre le conducteur et le tube.

Selon un mode de réalisation préféré, ladite seconde extrémité est son extrémité destinée à être connectée à l'élément supraconducteur.

Ledit gaz est un gaz non contrôlé, de préférence de l'air ou de l'azote.

Selon le document de l'art antérieur déjà cité, la structure de traversée peut comprendre un conducteur central entouré d'un espace dans lequel un vide a été créé ou rempli d'hélium qui ne se liquéfie pas à température cryogénique. L'espace sous vide ou rempli d'hélium s'étend de la partie à température cryogénique jusqu'à la partie à température ambiante. L'inconvénient de cette solution réside dans la nécessité d'une bonne étanchéité de la structure de traversée, ce qui conduit à des contraintes de réalisation difficiles et coûteuses. En effet, il ne doit pas exister de communication entre l'espace entourant le conducteur central et les autres parties de la traversée :
- dans la partie supérieure afin de conserver le vide ou l'hélium dans cet espace, une fuite dans la partie haute avec le milieu à température ambiante rompant cet atmosphère contrôlée ;
- dans la partie inférieure afin d'éviter une pénétration éventuelle du fluide cryogénique dans cet espace rompant également de cet atmosphère contrôlée.

De préférence, la fixation mécanique entre ledit conducteur et ledit tube au niveau de ladite première extrémité du conducteur est recouverte par ladite gaine isolante. Ce recouvrement est réalisé lors de la fabrication de la traversée et assure une étanchéité parfaite dudit espace à ce niveau.

Le tube est réalisé en un matériau bon conducteur électrique et de préférence alliage d'aluminium ou en cuivre, excellent conducteur électrique.

Avantageusement, la gaine isolante est réalisée en résine époxy.

De préférence, le coefficient de dilatation thermique du métal constituant le tube est voisin du coefficient de dilatation thermique du matériau constituant la gaine isolante.

Des lamelles métalliques peuvent être interposées entre le tube et le conducteur à proximité de l'extrémité du tube non fixée mécaniquement au conducteur (de préférence à proximité de l'extrémité du conducteur destinée à être fixée audit objet à température ambiante), les lamelles assurant un contact électrique entre le tube et le conducteur ;

Selon un mode de réalisation avantageux, la structure comporte en outre un écran électriquement conducteur entourant la gaine isolante, en contact avec elle, sur au moins une partie de la gaine s'étendant depuis l'extrémité de la traversée en contact avec l'enceinte à température cryogénique jusqu'à un endroit de la gaine dont la température est intermédiaire entre les températures cryogénique et ambiante. Lorsqu'un cône de contrainte entoure la gaine, l'écran s'étend de préférence jusqu'à ce cône.

D'autres avantages et caractéristiques de l'invention apparaîtront au cours de la description qui suit d'un mode de réalisation de l'invention, donné à titre d'exemple non limitatif, en référence aux dessins annexés et sur lesquels :
- la figure 1 illustre schématiquement un mode de réalisation de l'invention;
- les figures 2 à 5 montrent en coupe longitudinale et en section droite des éléments de la structure représentée sur la figure 1.

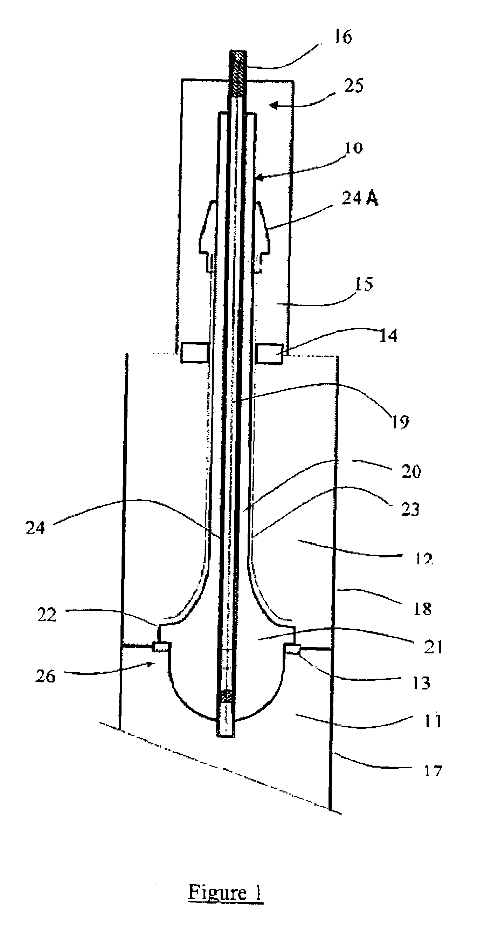

Sur la figure 1, la structure de connexion à un élément supraconducteur (non représenté), tel qu'un câble, comporte une traversée électrique 10 connectée à l'élément supraconducteur par son extrémité inférieure située dans une enceinte 11 à température cryogénique. Une enceinte intermédiaire 12, adjacente à l'enceinte cryogénique 11, est remplie de préférence d'un matériau solide à faible conductivité thermique. Ce matériau peut par exemple être sous forme de mousse, telle qu'une mousse au polyuréthane ou une mousse de verre cellulaire. La traversée électrique 10 traverse la paroi inférieure de l'enceinte intermédiaire 11 par une bride de fixation étanche 13 et la paroi supérieure par une bride de fixation étanche 14. La traversée électrique 10 se prolonge, en sortant de l'enceinte intermédiaire 12, à l'intérieur d'une enceinte à température ambiante 15 qui se termine par des moyens 16 de connexion électrique de la traversée, et donc de l'élément supraconducteur, à un objet, équipement ou dispositif approprié. L'enceinte intermédiaire se trouve donc à une température comprise entre la température du fluide cryogénique et la température ambiante. Les parois 17 et 18 respectivement de l'enceinte 11 à température cryogénique et de l'enceinte intermédiaire 12 forment des parois de cryostat pour une bonne isolation thermique. L'enceinte intermédiaire, étant étanche, est de préférence équipée d'une vanne de sécurité (non représentée) afin de palier à toute surpression qui pourrait survenir en cas de fuite au niveau de la bride 13.

La traversée électrique 10 se compose d'un conducteur central métallique 19, de préférence en alliage d'aluminium ou en cuivre et de forme cylindrique pleine. Il est entouré, sur sensiblement toute sa longueur, d'une gaine électriquement isolante 20 réalisée par exemple en époxy. La gaine isolante 20 se termine à son extrémité inférieure par un bulbe 21 comprenant une collerette de fixation 22. La partie du bulbe située au-dessus de la collerette 22 a de préférence une forme évasée, la partie la plus évasée étant au niveau de la collerette. Cette forme évasée permet d'augmenter la ligne de fuite de courant entre terre et haute tension et ainsi de diminuer les risques d'un claquage électrique au niveau de l'extrémité inférieure de la traversée. Le bulbe 21 est fixé de façon étanche, par la bride 13, sur la paroi interne de l'enceinte 11 à température cryogénique.

Un écran électriquement conducteur 23, de préférence métallique, enserre la gaine isolante sur au moins une section de gaine, c'est-à-dire sur une certaine longueur. La présence de cet écran est utile, mais non nécessaire. Il est par exemple réalisé par métallisation de la gaine isolante sur ladite section, laquelle s'étend depuis la partie de l'enceinte intermédiaire en contact avec la température cryogénique jusqu'à au moins la bride 14, c'est-à-dire la jonction de l'enceinte intermédiaire 12 avec l'enceinte à température ambiante 15. L'écran 23 est électriquement connecté à un potentiel fixe, de préférence au potentiel de la terre. Il a pour fonction de confiner le champ électrique le long du conducteur dans la traversée électrique uniquement, et plus précisément entre le conducteur central et l'écran.

Un cône de contrainte 24A, situé dans l'enceinte 15 à température ambiante, entoure la gaine 20 de la traversée électrique 10. La partie conductrice du cône de contrainte est reliée électriquement à l'écran 23, ainsi qu'à la bride de fixation étanche 14, électriquement conductrice. L'écran 23 peut être arrêtée au niveau de la bride de fixation 14 et être électriquement connecté à la partie conductrice du cône de contrainte, par exemple à l'aide d'un ruban semi-conducteur entouré autour de la gaine 20. Alternativement, l'écran peut être prolongé directement jusqu'à la partie conductrice du cône de contrainte. La fonction de ce cône de contrainte est de dévier ou d'évaser les lignes de champ électrique au niveau de l'arrêt de la métallisation afin d'éviter une discontinuité qui pourrait conduire à un claquage électrique.

La traversée électrique 10 se termine à l'extérieur de l'enceinte à température ambiante 15 par une cosse de connexion pour alimenter le câble supraconducteur en courant électrique sous moyenne ou haute tension ou pour alimenter un équipement à température ambiante en courant électrique sous moyenne ou haute tension en provenance du câble supraconducteur.

Selon l'invention, un tube métallique 24 de faible épaisseur est inséré entre le conducteur central 19 et la gaine isolante 20, sur pratiquement toute la longueur du conducteur central, avec un espace entre le conducteur et le tube contenant un gaz non contrôlé, de préférence de l'air ou de l'azote. Le tube métallique 24 est fixé au conducteur central à un seul niveau du conducteur, près de l'une des deux extrémités 25 et 26 du conducteur central 19 (l'extrémité 25 étant celle qui est proche de la température ambiante et l'extrémité 26 étant celle qui est proche de la température cryogénique). De préférence, le tube 24 est fixé au conducteur 19 au niveau de l'extrémité 26 proche de la température cryogénique et la fixation mécanique entre le conducteur et le tube au niveau de cette extrémité du conducteur est recouverte par ladite gaine isolante. Cette fixation mécanique peut se faire par soudage par exemple.

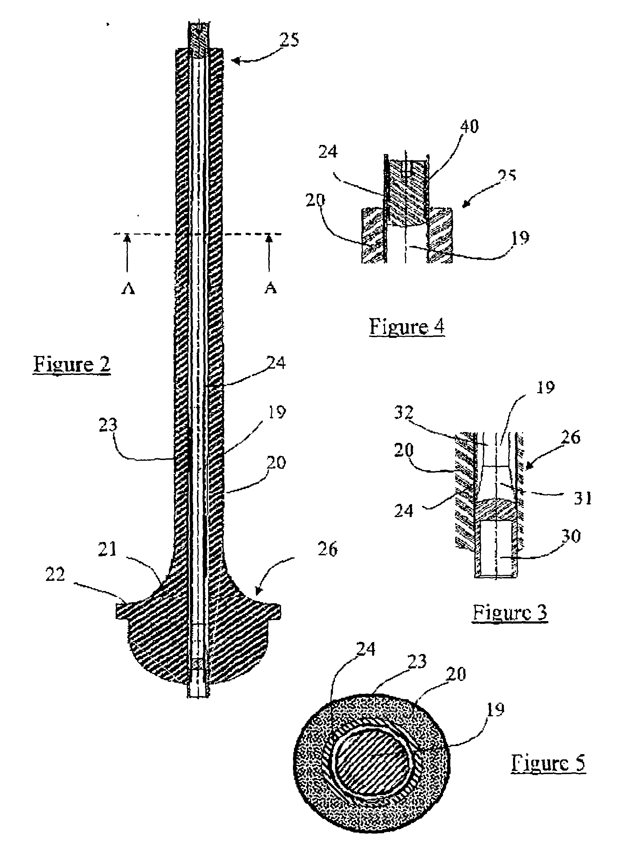

Les figures 2 et 5 montrent la structure de la traversée, respectivement en coupe longitudinale et en section droite selon le plan AA de la figure 2 avec, successivement en partant du centre, le conducteur central 19, le tube mince 24, la gaine électriquement isolante 20, dont l'une des deux extrémités forme le bulbe 21, et l'écran 23. Le tube métallique mince 24 est de préférence composé du même métal que le conducteur central, par exemple en cuivre ou en un alliage d'aluminium. Bien entendu, les matériaux constituant la gaine et le tube mince sont choisis de sorte que leurs coefficients de dilatation thermique sont proches l'un de l'autre. Le conducteur central, le tube métallique, la gaine isolante et l'écran sont concentriques, le conducteur étant en contact avec le tube, lequel est en contact avec la gaine, laquelle est en contact avec l'écran. Pour la fabrication de la traversée, le tube mince 24 est tout d'abord fixé au conducteur central 19, puis la gaine isolante 20 est moulée autour du tube ce qui permet une étanchéité parfaite avec le fluide cryogénique. A titre d'exemple, le diamètre du conducteur central peut être de l'ordre de 50 à 70 mm, alors que l'épaisseur du tube mince 24 peut être comprise entre 0,5 et 3 mm, de préférence entre 1 à 2 mm, et l'espace entre le conducteur et le tube être de l'ordre du millimètre. La section relativement importante du conducteur central permet d'éviter des pertes trop importantes et des flux thermiques par effet Joule. L'épaisseur de la gaine isolante est beaucoup plus grande que celle du tube mince, par exemple comprise entre 20 et 50 mm pour la partie cylindrique de la gaine ne comprenant pas le bulbe 21.

Dans le mode de réalisation représenté, la section du conducteur central à l'extrémité 26 située du côté de l'enceinte cryogénique, au niveau du bulbe 21, est légèrement inférieure à la section uniforme du conducteur central, de façon à limiter le flux thermique le long du conducteur. Sur la figure 3, l'extrémité 26 du conducteur 19 se compose d'une partie 30 en forme de connecteur femelle permettant de relier l'élément supraconducteur au conducteur central, d'une partie 31 de forme tronconique avec un diamètre décroissant en remontrant vers le haut de la traversée à température ambiante, suivie d'une partie tronconique 32 avec un diamètre croissant jusqu'à atteindre le diamètre constant du conducteur. Bien entendu, dans un autre mode de réalisation, le conducteur central 19 pourrait avoir un diamètre constant sur toute sa longueur. Le tube mince 24 est soudé au conducteur central au niveau du connecteur 30.

La figure 4 représente en coupe longitudinale l'extrémité 25 de la traversée, située à température ambiante. Le conducteur central 19 et le tube mince 24 ne sont pas solidaires et peuvent donc se dilater ou se rétracter indépendamment l'un de l'autre. Le tube et le conducteur sont cependant électriquement reliés par des moyens de contact électrique mobile situés entre le tube et le conducteur. A cette fin, des lamelles souples électriquement conductrices 40 sont intercalées entre le tube et le conducteur, en contact avec le tube et le conducteur. De façon générale, ces moyens de contact électrique sont situés à l'extrémité du tube mince non fixée au conducteur. Cependant, la fixation du tube au conducteur central étant de préférence à l'extrémité 26 de la traversée, les moyens de contact électrique sont de préférence situés à l'extrémité 25 située à température ambiante.

Le tube mince métallique 24 permet d'obtenir un bon équilibre thermique à l'interface entre le tube 24 et la gaine isolante 20 du fait de la faible épaisseur du tube, et donc du fait de la faible quantité de matière conductrice en contact avec la beaucoup plus grande quantité de matière isolante de la gaine. Le gradient thermique à l'interface tube/gaine est donc beaucoup plus petit que dans les dispositifs de l'art antérieur. De plus, même avec un refroidissement ou un échauffement rapide de la traversée, le flux thermique circule principalement dans le conducteur central, mais très peu dans le tube. La sensibilité de la structure de la traversée aux variations rapides de température est donc diminuée. De même, la dilatation (positive ou négative) due aux variations de température affecte principalement le conducteur central, du fait de sa masse. Le tube n'étant fixé mécaniquement au conducteur qu'à un seul endroit, les contraintes mécaniques à l'interface tube/gaine sont réduites puisqu'il n'y a pas de couplage thermique entre le tube et le conducteur central. Cependant, le conducteur central 19 et le tube 24 étant électriquement connectés, donc au même potentiel électrique, il n'y a pas de disparités de champ électrique et les lignes de champ électrique restent canalisées entre la gaine et l'ensemble tube/conducteur central.

D'autres modes de réalisation que celui décrit et représenté peut être conçu par l'homme du métier sans sortir du cadre de la présente invention.

## Revendications

1. Structure de traversée électrique (10) du type comprenant :
- un conducteur central (19) dont l'une (26) des deux extrémités est destinée à être connectée à un élément supraconducteur situé dans une enceinte à température cryogénique (11) et l'autre extrémité (25) à un objet à température ambiante, et
- une gaine électriquement isolante (20) entourant le conducteur sur sensiblement toute la longueur du conducteur,
- un tube métallique (24) entourant le conducteur sur sensiblement toute sa longueur et interposé entre la gaine isolante (20) et le conducteur (19), le tube étant fixé mécaniquement au conducteur à proximité de l'une des extrémités (25, 26) du conducteur, dite première extrémité, et n'étant pas fixé mécaniquement au conducteur à proximité de l'autre des extrémités du conducteur, dite seconde extrémité,
- un espace entre ledit conducteur et ledit tube contenant un gaz, structure **caractérisé en ce que** le tube est en contact électrique avec ladite seconde extrémité du conducteur.

2. Structure de traversée électrique selon la revendication 1 **caractérisée en ce que** ladite première extrémité du conducteur est son extrémité (26) destinée à être connectée à l'élément supraconducteur.

3. Structure selon l'une des revendications précédentes, **caractérisée en ce que** ledit gaz est de l'air ou de l'azote.

4. Structure de traversée électrique selon la revendication 2 **caractérisée en ce que** la fixation mécanique entre ledit conducteur (19) et ledit tube (24) au niveau de ladite première extrémité du conducteur (19) est recouverte par ladite gaine isolante (20).

5. Structure de traversée électrique selon l'une des revendications précédentes **caractérisée en ce que** le tube (24) est réalisé en un alliage d'aluminium ou en cuivre.

6. Structure de traversée électrique selon l'une des revendications précédentes **caractérisée en ce que** la gaine isolante (20) est réalisée en résine époxy.

7. Structure de traversée électrique selon l'une des revendications précédentes **caractérisée en ce que** le coefficient de dilatation thermique du métal constituant le tube (24) est voisin du coefficient de dilatation thermique du matériau constituant la gaine isolante (20).

8. Structure de traversée électrique selon l'une des revendications précédentes **caractérisée en ce que** des lamelles métalliques souples (40) sont interposées entre le tube et le conducteur à proximité de l'extrémité du tube (24) non fixée mécaniquement au conducteur, les lamelles (40) assurant un contact électrique entre le tube (24) et le conducteur (19).

9. Structure de traversée électrique selon les revendications 2 et 6 **caractérisée en ce que** les lamelles métalliques (40) sont interposées entre le tube (24) et le conducteur (19) à proximité de l'extrémité (25) du conducteur destinée à être connectée audit objet.

10. Structure de traversée électrique selon l'une des revendications précédentes **caractérisée en ce que** l'épaisseur du tube (24) est comprise entre 0,5 et 3 mm, et plus particulièrement entre 1 et 2 mm.

11. Structure de traversée électrique selon l'une des revendications précédentes **caractérisée en ce qu'**un écran électriquement conducteur (23) entoure la gaine isolante (20), en contact avec elle, sur au moins une partie de la gaine s'étendant depuis l'extrémité (26) de la traversée en contact avec l'enceinte à température cryogénique (11) jusqu'à un endroit de la gaine dont la température est intermédiaire entre les températures cryogénique et ambiante.

12. Structure de traversée électrique selon la revendication 9 **caractérisée en ce qu'**un cône de contrainte (24A) est fixé autour de la gaine (20), l'écran conducteur (23) s'étendant depuis l'extrémité (26) de la traversée en contact avec l'enceinte à température cryogénique jusqu'au cône de contrainte.

13. Structure de traversée électrique selon l'une des revendications précédentes **caractérisée en ce que** le conducteur central (19) a une section sensiblement uniforme, à l'exception de la section de la partie (32) du conducteur central (19) située à proximité de l'enceinte cryogénique (11), la section de ladite partie (32) étant plus faible que ladite section sensiblement uniforme.

14. Structure de traversée électrique selon la revendication 11 **caractérisée en ce que** ladite partie (32) du conducteur central a une forme sensiblement tronconique.

## Claims

1. An electrical bushing structure (10) of the type comprising:
- a central conductor (19), whereof one (26) of the two ends is intended to be connected to a superconducting element located in an enclosure at a cryogenic temperature (11) and the other end (25) to an object at room temperature, and
- an electrically insulating sheath (20) surrounding the conductor over substantially the whole length of the conductor,
- a metal tube (24) surrounding the conductor over substantially the whole of its length and interposed between the insulating sheath (20) and the conductor (19), the tube being mechanically attached to the conductor in proximity to one of the ends (25, 26) of the conductor, said first end, and not being mechanically attached to the conductor in proximity to the other of the ends of the conductor, said second end,
- a space between said conductor and said tube containing a gas, a structure **characterized in that** the tube is in electrical contact with said second end of the conductor.

2. The electrical bushing structure according to claim 1, **characterized in that** said first end of the conductor is its end (26) intended to be connected to the superconducting element.

3. The structure according to any of the preceding claims, **characterized in that** said gas is air or nitrogen.

4. The electrical bushing structure according to claim 2, **characterized in that** the mechanical attachment between said conductor (19) and said tube (24) at said first end of the conductor (19) is covered with said insulating sheath (20).

5. The electrical bushing structure according to any of the preceding claims, **characterized in that** the tube (24) is made in an aluminium or copper alloy.

6. The electrical bushing structure according to any of the preceding claims, **characterized in that** the insulating sheath (20) is made in epoxy resin.

7. The electrical bushing structure according to any of the preceding claims, **characterized in that** the thermal expansion coefficient of the metal forming the tube (24) is close to the thermal expansion coefficient of the material forming the insulating sheath (20).

8. The electrical bushing structure according to any of the preceding claims, **characterized in that** flexible metal strips (40) are interposed between the tube and the conductor in proximity to the end of the tube (24) not mechanically attached to the conductor, the strips (40) providing an electric contact between the tube (24) and the conductor (19.

9. The electrical bushing structure according to claims 2 and 6, **characterized in that** the metal strips (40) are interposed between the tube (24) and the conductor (19) in proximity to the end (25) of the conductor intended to be connected to said object.

10. The electrical bushing structure according to any of the preceding claims, **characterized in that** the thickness of the tube (24) is comprised between 0.5 and 3 mm, and more particularly between 1 and 2 mm.

11. The electrical bushing structure according to any of the preceding claims, **characterized in that** an electrically conducting shield (23) surrounds the insulating sheath (20), in contact with it, over at least one portion of the sheath extending from the end (26) of the bushing in contact with the enclosure at a cryogenic temperature (11) up to a location of the sheath, the temperature of which is intermediate between the cryogenic and room temperatures.

12. The electrical bushing structure according to claim 9, **characterized in that** a stress cone (24A) is attached around the sheath (20), the conducting shield (23) extending from the end (26) of the bushing in contact with the enclosure at a cryogenic temperature up to the stress cone.

13. The electrical bushing structure according to any of the preceding claims, **characterized in that** the central conductor (19) has a substantially uniform section, except for the section of the portion (32) of the central conductor (19) located in proximity to the cryogenic enclosure (11), the section of said portion (32) being smaller than said substantially uniform section.

14. The electrical bushing structure according to claim 11, **characterized in that** said portion (32) of the central conductor has a substantially frusto-conical shape.

## Patentansprüche

1. Elektrische Durchgangsstruktur (10) der Bauart, die umfasst:
- einen zentralen Leiter (19), von dem eines (26) der beiden Enden dazu bestimmt ist, mit einem supraleitenden Element verbunden zu sein, das sich in einem Tiefsttemperaturraum (11) befindet, und das andere Ende (25) mit einem Gegenstand in Umgebungstemperatur, und
- eine elektrisch isolierende Hülle (20), die den Leiter über etwa die gesamte Länge des Leiters umgibt,
- ein Metallrohr (24), das den Leiter über etwa seine Länge umgibt und das sich zwischen der isolierenden Hülle (20) und dem Leiter (19) befindet, wobei das Rohr mechanisch am Leiter in der Nähe eines der Enden (25, 26) des Leiters, erstes Ende genannt, befestigt ist, und nicht mechanisch am Leiter in der Nähe des anderen der Enden des Leiters, zweites Ende genannt, befestigt ist,
- einen Raum zwischen dem Leiter und dem Rohr, das ein Gas enthält,
wobei die Struktur **dadurch gekennzeichnet ist, dass** das Rohr elektrisch mit dem zweiten Ende des Leiters im Kontakt ist.

2. Elektrische Durchgangsstruktur nach Anspruch 1, **dadurch gekennzeichnet, dass** das erste Ende des Leiters sein Ende (26) ist, das dazu bestimmt ist, mit dem supraleitenden Element verbunden zu sein.

3. Struktur nach einem der vorangehenden Ansprüche, **dadurch gekennzeichnet, dass** das Gas Luft oder Stickstoff ist.

4. Elektrische Durchgangsstruktur nach Anspruch 2, **dadurch gekennzeichnet, dass** die mechanische Befestigung zwischen dem Leiter (19) und dem Rohr (24) auf Ebene des ersten Endes des Leiters (19) von der isolierenden Hülle (20) bedeckt ist.

5. Elektrische Durchgangsstruktur nach einem der vorangehenden Ansprüche, **dadurch gekennzeichnet, dass** das Rohr (24) aus einer Aluminiumlegierung oder aus Kupfer ausgeführt ist.

6. Elektrische Durchgangsstruktur nach einem der vorangehenden Ansprüche, **dadurch gekennzeichnet, dass** die isolierende Hülle (20) aus Epoxyharz ausgeführt ist.

7. Elektrische Durchgangsstruktur nach einem der vorangehenden Ansprüche, **dadurch gekennzeichnet, dass** der Wärmeausdehnungskoeffizient des das Rohr (24) bildenden Metalls etwa dem Wärmeausdehnungskoeffizienten des Materials entspricht, das die isolierende Hülle (20) bildet.

8. Elektrische Durchgangsstruktur nach einem der vorangehenden Ansprüche, **dadurch gekennzeichnet, dass** sich zwischen dem Rohr und dem Leiter in der Nähe des Endes des Rohrs (24), das am Leiter nicht mechanisch befestigt ist, elastische Metalllamellen (40) befinden, wobei die Lamellen (40) einen elektrischen Kontakt zwischen dem Rohr (24) und dem Leiter (19) sicherstellen.

9. Elektrische Durchgangsstruktur nach denn Ansprüchen 2 und 6, **dadurch gekennzeichnet, dass** sich die Metalllamellen (40) zwischen dem Rohr (24) und dem Leiter (19) in der Nähe des Endes (25) des Leiters befinden, das dazu bestimmt ist, mit dem Gegenstand verbunden zu werden.

10. Elektrische Durchgangsstruktur nach einem der vorangehenden Ansprüche, **dadurch gekennzeichnet, dass** die Dicke des Rohrs (24) zwischen 0,5 und 3 mm inklusive ist und insbesondere zwischen 1 und 2 mm.

11. Elektrische Durchgangsstruktur nach einem der vorangehenden Ansprüche, **dadurch gekennzeichnet, dass** ein elektrisch leitender Schirm (23) die isolierende Hülle (20) umgibt, in Kontakt mit ihr, über mindestens einen Abschnitt der Hülle, die sich vom Ende (26) des Durchgangs im Kontakt mit dem Tiefsttemperaturraum (11) bis zu einer Stelle der Hülle erstreckt, deren Temperatur zwischen der Tiefst- und der Umgebungstemperatur liegt.

12. Elektrische Durchgangsstruktur nach Anspruch 9, **dadurch gekennzeichnet, dass** ein Spannungskonus (24A) um die Hülle (20) befestigt ist, wobei sich der leitende Schirm (23) vom Ende (26) des Durchgangs im Kontakt mit dem Tiefsttemperaturraum bis zum Spannungskonus erstreckt.

13. Elektrische Durchgangsstruktur nach einem der vorangehenden Ansprüche, **dadurch gekennzeichnet, dass** der zentrale Leiter (19) einen etwa gleichmäßigen Querschnitt hat, mit Ausnahme des Querschnitts des Abschnitts (32) des zentralen Leiters (19) in der Nähe des Tiefsttemperaturraums (11), wobei der Querschnitt des Abschnitts (32) kleiner ist als der etwa gleichmäßige Querschnitt.

14. Elektrische Durchgangsstruktur nach Anspruch 11, **dadurch gekennzeichnet, dass** der Abschnitt (32) des zentralen Leiters eine etwa kegelstumpfförmige Form hat.
